(19) Europäisches Patentamt
European Patent Office
Office européen des brevets

(11) **EP 3 960 367 A1**

(12) **EUROPÄISCHE PATENTANMELDUNG**

(43) Veröffentlichungstag:
**02.03.2022 Patentblatt 2022/09**

(21) Anmeldenummer: **20192878.5**

(22) Anmeldetag: **26.08.2020**

(51) Internationale Patentklassifikation (IPC):
**B23P 9/02** *(2006.01)*      **B24B 39/04** *(2006.01)*
**C21D 7/08** *(2006.01)*      **B60B 37/06** *(2006.01)*

(52) Gemeinsame Patentklassifikation (CPC):
**B23P 9/02; B60B 17/00; C21D 7/08;** B60B 37/06;
B60B 2900/313; B60B 2900/321; B60Y 2200/30

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Siemens Mobility Austria GmbH**
**1210 Wien (AT)**

(72) Erfinder: **Boronkai, Laszlo**
**8101 Gratkorn (AT)**

(74) Vertreter: **Deffner, Rolf**
**Siemens Mobility GmbH**
**Postfach 22 16 34**
**80506 München (DE)**

(54) **FESTWALZVERFAHREN**

(57)    Die Erfindung bezieht sich auf ein Festwalzverfahren, insbesondere für Radsätze (1) von Schienenfahrzeugen, mit welchem mittels eines Walzwerkzeugs (2) bleibende Druckeigenspannungen in einem Werkstück gebildet werden. Um besonders vorteilhafte Oberflächeneigenschaften des Werkstücks zu erreichen, wird vorgeschlagen, dass eine Walzbearbeitung des Werkstücks mit einer von dem Walzwerkzeug (2) aufgebrachten Festwalzkraft (F) durchgeführt wird, welche in Abhängigkeit von einer maximalen Hertzschen Pressung ($p_{max}$) zwischen dem Walzwerkzeug (2) und dem Werkstück, von einer zu verfestigenden Randschichttiefe ($\Delta l$) des Werkstücks, von einer Poissonzahl ($\mu$) eines Werkstoffs der Werkstücks sowie von einer Streckgrenze ($\sigma_F$) des Werkstoffs des Werkstücks eingestellt wird.

## FIG 3

## Beschreibung

Die Erfindung betrifft ein Festwalzverfahren, insbesondere für Radsätze von Schienenfahrzeugen, mit welchem mittels eines Walzwerkzeugs bleibende Druckeigenspannungen in einem Werkstück gebildet werden.

Mittels Festwalzverfahren werden Oberflächen von Werkstücken behandelt, um Festigkeitseigenschaften von Randschichten der Werkstücke zu verbessern. Dabei werden ausgehend von einer Oberfläche eines Werkstücks bis zu einer definierten Tiefe unter der Oberfläche Druckeigenspannungen in das Werkstück eingebracht. Dadurch werden Widerstände gegen eine Bildung von Rissen in dem Werkstück sowie gegen ein Risswachstum gesteigert und somit eine Lebensdauer des Werkstücks erhöht. Insbesondere bei Radsätzen von Schienenfahrzeugen ist eine Festigkeitssteigerung in Randschichten wichtig, da es sich bei Radsätzen um sicherheitsrelevante Bauteile von Schienenfahrzeugen handelt, welche in Bezug auf Umgebungseinflüsse (z.B. Steinschläge aus einem Schotterbett eines Gleiskörpers) besonders exponiert angeordnet sind. Da Radsätze zudem Komponenten sind, welche einen aufwendigen Produktionsprozess und aufwendige Wartungs- und Instandhaltungsvorgänge erfordern, ist eine möglichst lange Radsatzlebensdauer erstrebenswert.

Aus dem Stand der Technik ist beispielsweise die DE 1 278 274 B bekannt, in welcher ein Walzwerkzeug zum Glatt- und Festwalzen vorgedrehter Radsätze von Schienenfahrzeugen offenbart ist. Das Walzwerkzeug ist pendelnd an einem Halter aufgehängt, kann gegen eine Oberfläche eines Radsatzes gedrückt werden und weist eine Stützrolle auf, welche in einem Walzvorgang axiale Kraftkomponenten einer Walzkraft aufnimmt.

Weiterhin ist die CN 108080881 A bekannt, in welcher ein Walzwerkzeug zur Bearbeitung eines Radprofils eines Schienenfahrzeugs gezeigt ist. Eine Walzrolle ist drehbar in einer Führungsvorrichtung gelagert, die Führungsvorrichtung federnd in einem Halter.

Ferner beschreibt die EP 3 581 325 A1 ein Festwalzverfahren für Laufflächen von Rädern von Schienenfahrzeugen, bei welchem eine Walzkraft eingestellt wird, indem Drehmomente von Antriebsmotoren von Vorschubachsen von Walzwerkzeugen gesteuert werden.

Die genannten Ansätze weisen in ihren bekannten Formen den Nachteil auf, dass nicht ersichtlich ist, auf welchen Prozessparametern zur Walzbearbeitung erforderliche Walzkräfte basieren.

Der Erfindung liegt die Aufgabe zugrunde, ein gegenüber dem Stand der Technik weiterentwickeltes Festwalzverfahren zur Erreichung einer besonders gleichmäßigen Verfestigung einer präzise definierten Randschicht in dem Werkstück anzugeben.

Erfindungsgemäß wird diese Aufgabe gelöst mit einem Festwalzverfahren der eingangs genannten Art, bei dem eine Walzbearbeitung des Werkstücks mit einer von dem Walzwerkzeug aufgebrachten Festwalzkraft durchgeführt wird, welche in Abhängigkeit von einer maximalen Hertzschen Pressung zwischen dem Walzwerkzeug und dem Werkstück, von einer zu verfestigenden Randschichttiefe des Werkstücks, von einer Poissonzahl eines Werkstoffs der Werkstücks sowie von einer Streckgrenze des Werkstoffs des Werkstücks eingestellt wird. Dadurch wird in der Randschicht des Werkstücks eine homogene Verteilung von Druckeigenspannungen erzielt. Für die Walzbearbeitung wird eine Festwalzkraft erreicht, welche sowohl an Materialeigenschaften als auch an eine erforderliche Randschichtgeometrie des Werkstücks präzise angepasst ist. Eine Vorgabe der Festwalzkraft (z.B. für ein Arbeitsprogramm einer Werkzeugmaschine) erfolgt nach definierten Kriterien und kann bedarfsgerecht variiert werden. Ergebnisse der Walzbearbeitung sind qualitativ hochwertig und reproduzierbar.

Wird eine Oberfläche eines Radsatzes mittels des erfindungsgemäßen Festwalzverfahrens bearbeitet, so steigert das die Lebensdauer des Radsatzes. Es wird eine hohe Oberflächengüte sowohl im Hinblick auf mechanische Eigenschaften als auch in Bezug auf geometrische Eigenschaften erzielt.

Eine besonders genaue Anpassung der Walzbearbeitung an die Materialeigenschaften des Werkstücks erhält man, wenn die maximale Hertzsche Pressung in Abhängigkeit von einer Zugfestigkeit des Werkstoffs des Werkstücks und von einer Fließgrenze des Werkstoffs des Werkstücks betraglich definiert wird.

In diesem Zusammenhang kann es günstig sein, wenn für einen ersten Wertebereich der Zugfestigkeit zwischen 600 MPa und 850 MPa sowie für einen zweiten Wertebereich der Fließgrenze zwischen 350 MPa und 450 MPa Werte zwischen 4500 MPa und 5500 MPa für die maximale Hertzsche Pressung eingesetzt werden.

Für höhere Niveaus der Zugfestigkeit und der Fließgrenze kann es jedoch auch hilfreich sein, wenn für einen ersten Wertebereich der Zugfestigkeit zwischen 850 MPa und 1100 MPa sowie für einen zweiten Wertebereich der Fließgrenze zwischen 700 MPa und 800 MPa Werte zwischen 5500 MPa und 6500 MPa für die maximale Hertzsche Pressung eingesetzt werden.

Qualitativ hochwertige Bearbeitungsergebnisse in Abhängigkeit der Materialeigenschaften des Werkstücks werden grundsätzlich erreicht, wenn für die maximale Hertzsche Pressung ein Wert eingesetzt wird, welcher fünfmal bis siebenmal größer als die Zugfestigkeit ist.

Eine günstige Lösung wird erzielt, wenn die Walzbearbeitung des Werkstücks mittels des Walzwerkzeugs mit einem Vorschub durchgeführt wird, welcher gleich jenem ersten Halbmesser eines Kontaktellipsoids zwischen dem Walzwerkzeug und dem Werkstück ist, welcher parallel zu einer Vorschubrichtung des Walzwerkzeugs ausgerichtet ist.

In diesem Zusammenhang ist es auch hilfreich, wenn der erste Halbmesser in Abhängigkeit eines zwei- bis dreifachen Elastizitätsmoduls des Werkstücks und des Walzwerkzeugs ermittelt wird.

Durch diese Maßnahmen wird erreicht, dass Bearbeitungsbereiche des Werkstücks in mehreren Durchgängen bearbeitet werden können, ohne dass eine Entfestigung der Randschicht des Werkstücks verursacht wird.

Der erste Halbmesser kann in Abhängigkeit des zwei- bis dreifachen Elastizitätsmoduls, der Festwalzkraft und von Krümmungsradien in zwei Hauptkrümmungsebenen des Walzwerkzeugs und des Werkstücks aus Tabellenwerken bestimmt werden.

Günstig ist es, wenn die Festwalzkraft in einer Weise eingestellt wird, dass die maximale Hertzsche Pressung gleich der Streckgrenze oder größer als die Streckgrenze ist. Dadurch wird eine gleichmäßige Plastifizierung einer zu verfestigenden Oberfläche des Werkstücks erzielt. Je geringer eine Abweichung zwischen der maximalen Hertzschen Pressung und der Streckgrenze ist, umso geringer ist eine Tiefenwirkung der mittels des erfindungsgemäßen Festwalzverfahrens gebildeten Druckeigenspannungen in dem Werkstück. Dadurch wird eine lokale Konzentration der Druckeigenspannungen an der Oberfläche des Werkstücks bewirkt.

Eine vorteilhafte Ausgestaltung erhält man, wenn jeder Querschnitt in einem Bearbeitungsbereich des Werkstücks in maximal drei Durchgängen festgewalzt wird.

Durch diese Maßnahme werden Risiken in Bezug auf eine Entfestigung der Randschicht des Werkstücks weiter gesenkt.

Es ist günstig, wenn die Walzbearbeitung in einer definierten ersten Reihenfolge eingeleitet wird, wobei zuerst das Werkstück in eine Drehbewegung versetzt wird, dann das Walzwerkzeug zu dem Werkstück zugestellt wird, dann der Vorschub des Walzwerkzeugs eingeschaltet wird und dann die Festwalzkraft eingeschaltet wird.

Dadurch wird ein Oberflächenzustand des Werkstücks ohne Spannungsgradienten erreicht.

Vorteilhaft ist es ferner, wenn die Walzbearbeitung in einer definierten zweiten Reihenfolge ausgeleitet wird, wobei zuerst die Festwalzkraft und der Vorschub gleichzeitig reduziert werden, wobei die Festwalzkraft auf einen Kraftwert von größer als 0 N und der Vorschub auf einen Vorschubwert von größer als 0 mm reduziert wird, dann das Walzwerkzeug von dem Werkstück rückgestellt wird und dann die Drehbewegung des Werkstücks ausgeschaltet wird.

Durch diese Maßnahme wird eine Verkleinerung einer Kontaktfläche zwischen dem Walzwerkzeug und dem Werkstück bewirkt, wodurch wiederum eine kontinuierliche Verteilung von während der Walzbearbeitung plastifiziertem Material auf der Oberfläche des Werkstücks erzielt wird.

Nachfolgend wird die Erfindung anhand von Ausführungsbeispielen näher erläutert.

Es zeigen beispielhaft:

Fig. 1:     Ein Flussdiagramm zu einer beispielhaften Ausführungsvariante eines erfindungsgemäßen Festwalzverfahrens,

Fig. 2:     Einen Grundriss eines Kontaktellipsoids zwischen einem Walzwerkzeug und einem Werkstück, welches während einer Walzbearbeitung mittels des erfindungsgemäßen Festwalzverfahrens gebildet wird, und

Fig. 3:     Eine beispielhafte Ausführungsvariante eines erfindungsgemäßen Radsatzes eines Schienenfahrzeugs mit einer mittels des erfindungsgemäßen Festwalzverfahrens zu verfestigenden Oberfläche.

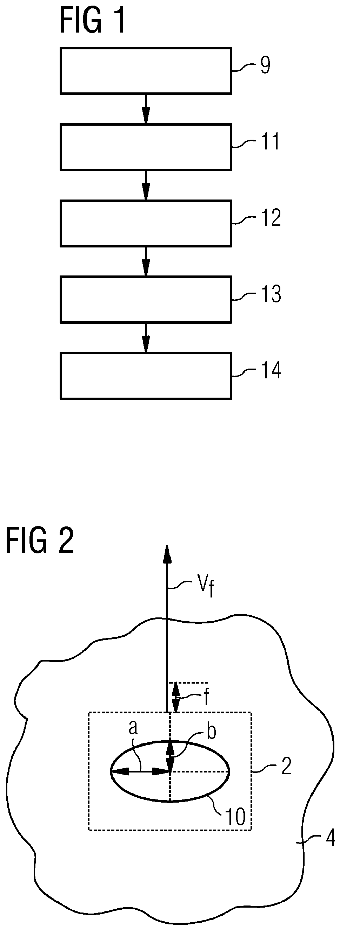

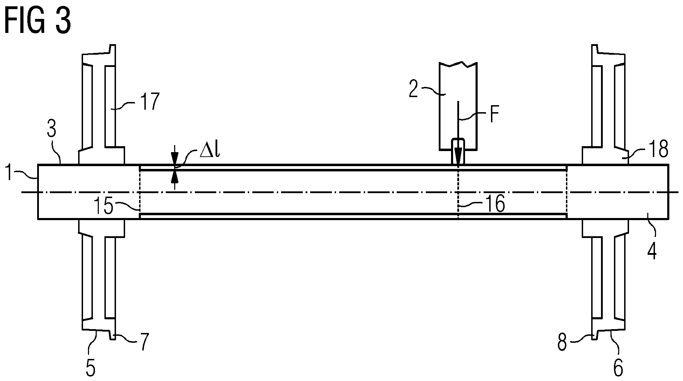

Fig. 1 zeigt ein Flussdiagramm zu einer beispielhaften Ausführungsvariante eines erfindungsgemäßen Festwalzverfahrens, welches zur Walzbearbeitung eines in Fig. 3 gezeigten Radsatzes 1 eines Fahrwerks eines Schienenfahrzeugs eingerichtet ist. Mittels der beispielhaften Ausführungsvariante eines erfindungsgemäßen Festwalzverfahrens und eines in Fig. 2 und Fig. 3 dargestellten Walzwerkzeugs 2 wird eine in Fig. 3 dargestellte Oberfläche 3 des Radsatzes 1 festgewalzt. Die Oberfläche 3 ist Teil einer Radsatzwelle 4 des Radsatzes 1. Die Radsatzwelle 4 fungiert demnach als Werkstück für die Walzbearbeitung.

Erfindungsgemäß ist es jedoch auch vorstellbar, das erfindungsgemäße Festwalzverfahren für andere Bereiche des Radsatzes 1 (z.B. für eine erste Lauffläche 5 oder einen ersten Radkranz 7 etc.) oder für andere Werkstücke einzusetzen.

Die beispielhafte Ausführungsvariante eines erfindungsgemäßen Festwalzverfahrens wird mittels einer in Fig. 1 nicht gezeigten Werkzeugmaschine, welche als Computerized Numerical Control (CNC) - Walzmaschine ausgebildet ist, durchgeführt. Zunächst werden mittels einer in Fig. 1 nicht dargestellten Recheneinheit mittels eines Ermittlungsvorgangs 9 eine Festwalzkraft F und ein in Fig. 2 gezeigter Vorschub f ermittelt und über eine Eingabevorrichtung der CNC-Walzmaschine an die Steuerung der CNC-Walzmaschine übermittelt.

Erfindungsgemäß ist es auch denkbar, dass es sich bei der Recheneinheit um einen Maschinenrechner der CNC-Walzmaschine handelt und die Festwalzkraft F sowie der Vorschub f unmittelbar auf der CNC-Walzmaschine ermittelt werden.

Die von dem Walzwerkzeug 2 aufzubringende Festwalzkraft F wird in Abhängigkeit von einer maximalen Hertzschen Pressung $p_{max}$ zwischen dem Walzwerkzeug 2 und dem Werkstück, von einer zu verfestigenden Randschichttiefe $\Delta 1$ der Radsatzwelle 4 sowie von einer Poissonzahl $\mu$ und von einer Streckgrenze $\sigma_F$ eines Radsatzwellenwerkstoffs

(Stahl) mittels folgender erster Bildungsvorschrift ermittelt:

$$\frac{p_{max}}{\sigma_F} = 2 \left[ \frac{3}{1 + \left( \dfrac{\Delta l}{\sqrt{\dfrac{F}{\pi \cdot \frac{2}{3} \cdot p_{max}}}} \right)^2} + 2(1+\mu)\left( \frac{\Delta l}{\sqrt{\dfrac{F}{\pi \cdot \frac{2}{3} \cdot p_{max}}}} \cdot arcctg \frac{\Delta l}{\sqrt{\dfrac{F}{\pi \cdot \frac{2}{3} \cdot p_{max}}}} - 1 \right) \right]^{-1}$$

Durch Einsetzen von Werten für die maximale Hertzsche Pressung $p_{max}$, für die zu verfestigende Randschicht-tiefe $\Delta l$, für die Poissonzahl $\mu$ sowie für die Streckgrenze $\sigma_F$ und Anwendung eines Newtonverfahrens auf die erste Bildungsvorschrift wird die Festwalzkraft F numerisch aus der ersten Bildungsvorschrift ermittelt.
Die Randschichttiefe $\Delta l$ wird für diese beispielhafte Ausführungsvariante eines erfindungsgemäßen Festwalzverfahrens mit 0,5 mm eingesetzt, die Poissonzahl $\mu$ mit 0,285, wobei es sich um Mindestwerte handelt.
Ein Betrag für die Hertzsche Pressung $p_{max}$ wird hierbei in Abhängigkeit von einer Zugfestigkeit und von einer Fließgrenze des Radsatzwellenwerkstoffs definiert.
Die Zugfestigkeit beträgt zwischen 600 MPa und 850 MPa, die Fließgrenze zwischen 350 MPa und 450 MPa. Für diese Wertebereiche der Zugfestigkeit und der Fließgrenze wird ein Betrag der maximalen Hertzschen Pressung $p_{max}$ zwischen 4500 MPa und 5500 MPa eingesetzt.
Erfindungsgemäß ist es jedoch auch denkbar, dass der Radsatzwellenwerkstoff eine höhere Zugfestigkeit und eine höhere Fließgrenze aufweist. Beträgt beispielsweise die Zugfestigkeit zwischen 850 MPa und 1100 MPa und die Fließgrenze zwischen 700 MPa und 800 MPa, so wird ein Betrag zwischen 5500 MPa und 6500 MPa für die maximale Hertzsche Pressung $p_{max}$ eingesetzt.
Grundsätzlich wird für die maximale Hertzsche Pressung $p_{max}$ ein Wert eingesetzt, welcher fünfmal bis siebenmal größer als die Zugfestigkeit ist, um ein qualitativ besonders hochwertiges Arbeitsergebnis zu erzielen.
Jedenfalls muss die Festwalzkraft F in einer Weise eingestellt werden, dass die maximale Hertzsche Pressung $p_{max}$ gleich der Streckgrenze $\sigma_F$ oder größer als die Streckgrenze $\sigma_F$ ist.
Als Streckgrenze $\sigma_F$ wird für diese beispielhafte Ausführungsvariante eines erfindungsgemäßen Festwalzverfahrens die Fließgrenze eingesetzt, d.h. ein Wert zwischen 350 MPa und 450 MPa.
Der Ermittlungsvorgang 9 umfasst auch eine Ermittlung des Vorschubs f des Walzwerkzeugs. Der Vorschub f wird gleich jenem ersten Halbmesser b eines in Fig. 2 gezeigten Kontaktellipsoids 10 zwischen dem Walzwerkzeug 2 und dem Werkstück gewählt, welcher parallel zu einer Vorschubrichtung des Walzwerkzeugs 2 ausgerichtet ist.
Der erste Halbmesser b wird mittels einer zweiten Bildungsvorschrift ermittelt, welche einen Hertzschen Koeffizienten $\chi_H$, die Festwalzkraft F, ein modifiziertes Elastizitätsmodul E* sowie ein kumuliertes Krümmungsmaß $\rho^*$ umfasst:

$$b = \chi_H \sqrt[3]{\frac{3F}{E^* \rho^*}}$$

Der Hertzsche Koeffizient $\chi_H$ wird mittels eines Tabellenwerks auf Grundlage von Krümmungen des Walzwerkzeugs 2 und des Werkstücks in Hauptkrümmungsebenen bestimmt, das kumulierte Krümmungsmaß $\rho^*$ mit den Krümmungen ermittelt.

Die zweite Bildungsvorschrift, der Hertzsche Koeffizient $\chi_H$, die Krümmungen, das Tabellenwerk und das kumulierte Krümmungsmaß $\rho^*$ sind aus dem Stand der Technik bekannt und in Kirchner, E.; "Leistungsübertragung in Fahrzeuggetrieben - Grundlagen der Auslegung, Entwicklung und Validierung von Fahrzeuggetrieben und deren Komponenten"; Springer-Verlag Berlin Heidelberg 2007; ISBN 978-3-540-35288-4; S. 655ff offenbart.

In die an sich bekannte zweite Bildungsvorschrift werden erfindungsgemäß die ermittelte Festwalzkraft F sowie als modifiziertes Elastizitätsmodul E* ein zwei- bis dreifaches Vergleichs-Elastizitätsmodul, welches aus einem Radsatzwellenwerkstoff-Elastizitätsmodul und einem Walzwerkzeugwerkstoff-Elastizitätsmodul gebildet wird, eingesetzt und damit der erste Halbmesser b und somit der Vorschub f ermittelt.

Die erfindungsgemäß ermittelte Festwalzkraft F und der erfindungsgemäß ermittelte Vorschub f, d.h. der erste Halbmesser b, werden von der Recheneinheit an die CNC-Walzmaschine übermittelt und somit in der CNC-Walzmaschine für die darauffolgende Walzbearbeitung eingestellt (Einstellvorgang 11).

Die Walzbearbeitung umfasst einen Einleitvorgang 12, einen stabilen Bearbeitungsvorgang 13 und einen Ausleitvorgang 14. Mittels des Einleitvorgangs 12 wird die Walzbearbeitung in einer definierten ersten Reihenfolge eingeleitet, wobei zuerst der Radsatz 1 in eine Drehbewegung mit an der CNC-Walzmaschine eingestellter Drehzahl n versetzt wird.

Anschließend wird das Walzwerkzeug 2 zu der Radsatzwelle 4 zugestellt. Abschließend wird der ermittelte und eingestellte Vorschub f des Walzwerkzeugs 2 und danach die ermittelte und eingestellte Festwalzkraft F eingeschaltet.

Auf den Einleitvorgang 12 folgt der stabile Bearbeitungsvorgang 13. In dem Bearbeitungsvorgang 13 wird die Radsatzwelle mit dem Vorschub f, einer Vorschubgeschwindigkeit $v_f = n \cdot f$ und der Festwalzkraft F bearbeitet, wobei jeder Querschnitt in einem in Fig. 3 gezeigten Bearbeitungsbereich 15 der Radsatzwelle 4 in maximal drei Durchgängen festgewalzt wird.

Im Anschluss an den Bearbeitungsvorgang 13 wird zur Beendigung der Walzbearbeitung der Ausleitvorgang 14 durchgeführt.

Dabei wird die Walzbearbeitung in einer definierten zweiten Reihenfolge ausgeleitet, wobei zuerst die Festwalzkraft F und der Vorschub f gleichzeitig reduziert werden, wobei die Festwalzkraft F auf einen Kraftwert von größer als 0 N und der Vorschub f auf einen Vorschubwert von größer als 0 mm reduziert werden. Hierbei werden eine im Vergleich zu der ursprünglich eingestellten Festwalzkraft F verringerte Ausleitfestwalzkraft und ein mit der Ausleitfestwalzkraft über die zweite Bildungsvorschrift ermittelter reduzierter Ausleitvorschub an der CNC-Walzmaschine eingestellt, wobei die Ausleitfestwalzkraft bezogen auf die ursprünglich eingestellte Festwalzkraft F einen Wert im einstelligen Prozentbereich aufweist.

Danach wird das Walzwerkzeug 2 von der Radsatzwelle 4 rückgestellt und abschließend die Drehbewegung des Radsatzes 1 ausgeschaltet.

In Fig. 2 ist ein Grundriss eines Kontaktellipsoids 10 zwischen einem Walzwerkzeug 2 und einem Werkstück dargestellt, welches während einer Walzbearbeitung mittels eines erfindungsgemäßen Festwalzverfahrens gebildet wird.

Bei dem Werkstück handelt es sich um eine auch in Fig. 3 gezeigte Radsatzwelle 4 eines Fahrwerks eines Schienenfahrzeugs.

Das Kontaktellipsoid 10 erscheint in dem Grundriss elliptisch und weist einen ersten Halbmesser b und einen zweiten Halbmesser a auf.

Der erste Halbmesser b ist kleiner als der zweite Halbmesser a und parallel zu einer Vorschubrichtung des Walzwerkzeugs 2 ausgerichtet.

In die Vorschubrichtung verlaufen ein Vorschub f und eine Vorschubgeschwindigkeit $v_f$, welche wie im Zusammenhang mit Fig. 1 beschrieben ermittelt werden.

Der Vorschub f ist demnach gleich groß wie der erste Halbmesser b des Kontaktellipsoids 10. Mit dem Vorschub f wird die im Zusammenhang mit Fig. 1 beschriebene Walzbearbeitung der Radsatzwelle 4 durchgeführt.

Fig. 3 zeigt eine beispielhafte Ausführungsvariante eines erfindungsgemäßen Radsatzes 1 eines Fahrwerks eines Schienenfahrzeugs mit einer mittels jener beispielhaften Ausführungsvariante eines erfindungsgemäßen Festwalzverfahrens, welche im Zusammenhang mit Fig. 1 beschrieben ist, zu verfestigenden Oberfläche 3 einer Radsatzwelle 4. Bei der Oberfläche 3 handelt es sich um eine Mantelfläche der Radsatzwelle 4.

Ein Walzwerkzeug 2 kontaktiert einen ersten Querschnitt 16 in einem Bearbeitungsbereich 15 der Radsatzwelle 4 des Radsatzes 1, welche bzw. welcher als Werkstück fungiert, wobei das Walzwerkzeug 2 eine Festwalzkraft F auf die Radsatzwelle 4 aufbringt.

Jeder Querschnitt in dem Bearbeitungsbereich 15 wird in maximal drei Durchgängen festgewalzt.

Zwischen dem Bearbeitungsbereich 15 einerseits sowie einem ersten Rad 17 und einem zweiten Rad 18 des Radsatzes 1 andererseits sind Auslaufzonen für das Walzwerkzeug 2 vorgesehen.

Nach einer derartigen Walzbearbeitung weist die Oberfläche 3 im Bearbeitungsbereich 15 der Radsatzwelle 4 eine tiefenwirkungsfreie, gleichmäßige Druckeigenspannung ohne Spannungsgradienten auf.

Erfindungsgemäß ist es auch möglich, dass die ganze Oberfläche 3, d.h. die ganze Mantelfläche der Radsatzwelle 4 festgewalzt wird und das erste Rad 17 sowie das zweite Rad 18 nach der Walzbearbeitung mit der Radsatzwelle 4 verbunden, z.B. auf die Radsatzwelle 4 aufgepresst werden.

Das erste Rad 17 weist eine erste Lauffläche 5 und einen ersten Radkranz 7 auf, das zweite Rad 18 eine zweite Lauffläche 6 und einen zweiten Radkranz 8.

Erfindungsgemäß ist es denkbar, auch die erste Lauffläche 5, die zweite Lauffläche 6, den ersten Radkranz 7 und/oder den zweiten Radkranz 8 mittels des erfindungsgemäßen Festwalzverfahrens zu bearbeiten.

Weiterhin ist es vorstellbar, dass beispielsweise auch Losradsätze von Losradfahrwerken (z.B. ein Achsstummel) etc. mittels des erfindungsgemäßen Festwalzverfahrens festgewalzt werden.

Liste der Bezeichnungen

| 1 | Radsatz |
|---|---|
| 2 | Walzwerkzeug |
| 3 | Oberfläche |
| 4 | Radsatzwelle |
| 5 | Erste Lauffläche |
| 6 | Zweite Lauffläche |
| 7 | Erster Radkranz |
| 8 | Zweiter Radkranz |
| 9 | Ermittlungsvorgang |
| 10 | Kontaktellipsoid |
| 11 | Einstellvorgang |
| 12 | Einleitvorgang |
| 13 | Bearbeitungsvorgang |
| 14 | Ausleitvorgang |
| 15 | Bearbeitungsbereich |
| 16 | Erster Querschnitt |
| 17 | Erstes Rad |
| 18 | Zweites Rad |

| F | Festwalzkraft |
|---|---|
| f | Vorschub |
| $p_{max}$ | Maximale Hertzsche Pressung |
| $\Delta l$ | Randschichttiefe |
| $\mu$ | Poissonzahl |
| $\sigma_F$ | Streckgrenze |
| b | Erster Halbmesser |
| a | Zweiter Halbmesser |
| $\chi_H$ | Hertzscher Koeffizient |
| $E^*$ | Modifiziertes Elastizitätsmodul |
| $\rho^*$ | Kumuliertes Krümmungsmaß |
| n | Drehzahl |
| $v_f$ | Vorschubgeschwindigkeit |

**Patentansprüche**

**1.** Festwalzverfahren, insbesondere für Radsätze von Schienenfahrzeugen, mit welchem mittels eines Walzwerkzeugs bleibende Druckeigenspannungen in einem Werkstück gebildet werden, **dadurch gekennzeichnet, dass** eine Walzbearbeitung des Werkstücks mit einer von dem Walzwerkzeug (2) aufgebrachten Festwalzkraft (F) durchgeführt wird, welche in Abhängigkeit von einer maximalen Hertzschen Pressung ($p_{max}$) zwischen dem Walzwerkzeug (2) und dem Werkstück, von einer zu verfestigenden Randschichttiefe ($\Delta l$) des Werkstücks, von einer Poissonzahl ($\mu$) eines Werkstoffs der Werkstücks sowie von einer Streckgrenze ($\sigma_F$) des Werkstoffs des Werkstücks eingestellt wird.

2. Festwalzverfahren nach Anspruch 1, **dadurch gekennzeichnet, dass** die maximale Hertzsche Pressung ($p_{max}$) in Abhängigkeit von einer Zugfestigkeit des Werkstoffs des Werkstücks und von einer Fließgrenze des Werkstoffs des Werkstücks betraglich definiert wird.

3. Festwalzverfahren nach Anspruch 2, **dadurch gekennzeichnet, dass** für einen ersten Wertebereich der Zugfestigkeit zwischen 600 MPa und 850 MPa sowie für einen zweiten Wertebereich der Fließgrenze zwischen 350 MPa und 450 MPa Werte zwischen 4500 MPa und 5500 MPa für die maximale Hertzsche Pressung ($p_{max}$) eingesetzt werden.

4. Festwalzverfahren nach Anspruch 2, **dadurch gekennzeichnet, dass** für einen ersten Wertebereich der Zugfestigkeit zwischen 850 MPa und 1100 MPa sowie für einen zweiten Wertebereich der Fließgrenze zwischen 700 MPa und 800 MPa Werte zwischen 5500 MPa und 6500 MPa für die maximale Hertzsche Pressung ($p_{max}$) eingesetzt werden.

5. Festwalzverfahren nach Anspruch 2, **dadurch gekennzeichnet, dass** für die maximale Hertzsche Pressung ($p_{max}$) ein Wert eingesetzt wird, welcher fünfmal bis siebenmal größer als die Zugfestigkeit ist.

6. Festwalzverfahren nach einem der Ansprüche 1 bis 5, **dadurch gekennzeichnet, dass** die Walzbearbeitung des Werkstücks mittels des Walzwerkzeugs (2) mit einem Vorschub (f) durchgeführt wird, welcher gleich jenem ersten Halbmesser (b) eines Kontaktellipsoids (10) zwischen dem Walzwerkzeug (2) und dem Werkstück ist, welcher parallel zu einer Vorschubrichtung des Walzwerkzeugs (2) ausgerichtet ist.

7. Festwalzverfahren nach Anspruch 6, **dadurch gekennzeichnet, dass** der erste Halbmesser (b) in Abhängigkeit eines zwei- bis dreifachen Elastizitätsmoduls des Werkstücks und des Walzwerkzeugs (2) ermittelt wird.

8. Festwalzverfahren nach einem der Ansprüche 1 bis 7, **dadurch gekennzeichnet, dass** die Festwalzkraft (F) in einer Weise eingestellt wird, dass die maximale Hertzsche Pressung ($p_{max}$) gleich der Streckgrenze ($\sigma_F$) oder größer als die Streckgrenze ($\sigma_F$) ist.

9. Festwalzverfahren nach einem der Ansprüche 1 bis 8, **dadurch gekennzeichnet, dass** jeder Querschnitt in einem Bearbeitungsbereich (15) des Werkstücks in maximal drei Durchgängen festgewalzt wird.

10. Festwalzverfahren nach einem der Ansprüche 1 bis 9, **dadurch gekennzeichnet, dass** die Walzbearbeitung in einer definierten ersten Reihenfolge eingeleitet wird, wobei zuerst das Werkstück in eine Drehbewegung versetzt wird, dann das Walzwerkzeug (2) zu dem Werkstück zugestellt wird, dann der Vorschub (f) des Walzwerkzeugs (2) eingeschaltet wird und dann die Festwalzkraft (F) eingeschaltet wird.

11. Festwalzverfahren nach einem der Ansprüche 1 bis 10, **dadurch gekennzeichnet, dass** die Walzbearbeitung in einer definierten zweiten Reihenfolge ausgeleitet wird, wobei zuerst die Festwalzkraft (F) und der Vorschub (f) gleichzeitig reduziert werden, wobei die Festwalzkraft (F) auf einen Kraftwert von größer als 0 N und der Vorschub (f) auf einen Vorschubwert von größer als 0 mm reduziert wird, dann das Walzwerkzeug (2) von dem Werkstück rückgestellt wird und dann die Drehbewegung des Werkstücks ausgeschaltet wird.

12. Radsatz mit einer Oberfläche, welche mittels eines Verfahrens nach einem der Ansprüche 1 bis 11 festgewalzt ist, **dadurch gekennzeichnet, dass** die Oberfläche (3) eine tiefenwirkungsfreie, gleichmäßige Druckeigenspannung aufweist.

# FIG 1

```
┌─────────────────────────┐
│                         │── 9
└─────────────────────────┘
            │
            ▼
┌─────────────────────────┐
│                         │── 11
└─────────────────────────┘
            │
            ▼
┌─────────────────────────┐
│                         │── 12
└─────────────────────────┘
            │
            ▼
┌─────────────────────────┐
│                         │── 13
└─────────────────────────┘
            │
            ▼
┌─────────────────────────┐
│                         │── 14
└─────────────────────────┘
```

# FIG 2

FIG 3

Europäisches
Patentamt

European
Patent Office

Office européen
des brevets

**EUROPÄISCHER RECHERCHENBERICHT**

Nummer der Anmeldung

EP 20 19 2878

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | JP S54 38248 A (MITSUBISHI HEAVY IND LTD) 22. März 1979 (1979-03-22) | 1,2,12 | INV. B23P9/02 |
| Y | * Zusammenfassung; Abbildungen 1-4 * | 10,11 | B24B39/04 |
| A | * Seite 1, Zeilen 27-31 * | 3-9 | C21D7/08 |
|   | * Seite 1, Zeile 41 * | | B60B37/06 |
|   | * Seite 1, Zeile 43 - Seite 2, Zeile 45 * | | |
|   | ----- | | |
| Y,D | EP 3 581 325 A1 (HEGENSCHEIDT MFD GMBH & CO KG [DE]) 18. Dezember 2019 (2019-12-18) * Absätze [0016], [0020]; Abbildungen 1-3 * | 10,11 | |
|   | ----- | | |
| A,D | DE 12 78 274 B (HEGENSCHEIDT KG WILHELM) 19. September 1968 (1968-09-19) * Absätze [0004], [0009]; Abbildungen 1-3 * | 1-12 | |
|   | ----- | | |

RECHERCHIERTE SACHGEBIETE (IPC)

B23P
C21D
B24D
B24B
B60B

Der vorliegende Recherchenbericht wurde für alle Patentansprüche erstellt

| Recherchenort | Abschlußdatum der Recherche | Prüfer |
|---|---|---|
| Den Haag | 12. Februar 2021 | Sérgio de Jesus, E |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
...........................................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 20 19 2878

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-02-2021

| Im Recherchenbericht angeführtes Patentdokument | | Datum der Veröffentlichung | Mitglied(er) der Patentfamilie | | | Datum der Veröffentlichung |
|---|---|---|---|---|---|---|
| JP S5438248 | A | 22-03-1979 | JP | S5438248 | A | 22-03-1979 |
| | | | JP | S5819427 | B2 | 18-04-1983 |
| EP 3581325 | A1 | 18-12-2019 | EP | 3375561 | A1 | 19-09-2018 |
| | | | EP | 3581325 | A1 | 18-12-2019 |
| | | | ES | 2783899 | T3 | 18-09-2020 |
| | | | PL | 3375561 | T3 | 27-07-2020 |
| DE 1278274 | B | 19-09-1968 | DE | 1278274 | B | 19-09-1968 |
| | | | US | 3367160 | A | 06-02-1968 |

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 1278274 B
- CN 108080881 A

- EP 3581325 A1

**In der Beschreibung aufgeführte Nicht-Patentliteratur**

- **KIRCHNER, E.** Leistungsübertragung in Fahrzeug-getrieben - Grundlagen der Auslegung, Entwicklung und Validierung von Fahrzeuggetrieben und deren Komponenten. Springer-Verlag, 2007, 655ff